# EUROPEAN PATENT APPLICATION

(11) **EP 4 827 209 A1**
(43) Date of publication of application: **21.10.2026**
(21) Application number: 24910735.0
(22) Date of filing: 11.12.2024
(51) Int. Cl.: H04W 72/1268

(54) **COMMUNICATION METHOD, RELATED APPARATUS AND COMMUNICATION SYSTEM**

(30) Priority: 29.12.2023 CN 202311871987
(71) Applicant: Huawei Technologies Co., Ltd., Shenzhen, Guangdong 518129 (CN)
(72) Inventor: PENG, Wenjie, Shenzhen, Guangdong 518129 (CN)
(74) Representative: Isarpatent
(86) International application number: PCT/CN2024/138624
(87) International publication number: WO 2025/139804

(57) **Abstract**

This application provides a communication method, a related apparatus, and a communication system, to ensure efficient resource scheduling between a terminal device and primary and secondary access network devices, thereby improving an uplink transmission rate. The method includes: A terminal device receives first information, where the first information indicates at least one split ratio of a first RB, and the first RB is a split bearer between a first access network device and the terminal device and between a second access network device and the terminal device; and the terminal device determines a first split ratio from the at least one split ratio, and transmits uplink data of the first RB based on the first split ratio.

## Description

This application claims priority to Chinese Patent Application No. 202311871987.X, filed with the China National Intellectual Property Administration on December 29, 2023 and entitled "COMMUNICATION METHOD, RELATED APPARATUS, AND COMMUNICATION SYSTEM", which is incorporated herein by reference in its entirety.

### TECHNICAL FIELD

This application relates to the field of communication technologies, and in particular, to a communication method, a related apparatus, and a communication system.

### BACKGROUND

In a wireless communication system, for example, in a dual connectivity (dual connectivity, DC) scenario, a split bearer scheme may be used. In this scheme, a bearer uses both air interface resources of a primary access network device and air interface resources of a secondary access network device for data transmission. The split bearer scheme may include two modes: a split bearer with a data anchor located on the primary access network device and a split bearer with a data anchor located on the secondary access network device.

When uplink transmission is performed using the split bearer scheme, a terminal device needs to distribute, based on scheduling information of the primary and secondary access network devices, data buffered in a packet data convergence protocol (packet data convergence protocol, PDCP) entity to radio link control (radio link control, RLC) entities corresponding to the primary and secondary access network devices, assemble the data into packets, and send the packets to the primary and secondary access network devices. However, in actual transmission, to accelerate data processing, before receiving the scheduling information, the terminal device distributes, according to an algorithm of the terminal device, data buffered in the PDCP entity to the RLC entities corresponding to the primary and secondary access network devices. The primary and secondary access network devices cannot implement efficient resource scheduling, and therefore an uplink transmission rate is affected.

### SUMMARY

This application provides a communication method, a related apparatus, and a communication system, to implement efficient resource scheduling and improve an uplink transmission rate.

According to a first aspect, this application provides a communication method, and the method may be applied to a communication apparatus. For example, the communication apparatus may be a terminal device, may be a component (such as a chip or a chip system) disposed in the terminal device, or may be a logical module or software that can implement all or some functions of the terminal device. This is not limited in this application. For ease of understanding and description, the following describes the method by using a terminal device as an example of the communication apparatus.

For example, the method includes: receiving first information, where the first information indicates at least one split ratio of a first radio bearer (radio bearer, RB), and the first RB is a split bearer between a first access network device and the terminal device and between a second access network device and the terminal device; determining a first split ratio, where the first split ratio belongs to the at least one split ratio; and transmitting uplink data of the first RB based on the first split ratio.

For example, the first RB may be a data radio bearer (data radio bearer, DRB), a signaling radio bearer (signaling radio bearer, SRB), or a multicast and broadcast service (multicast and broadcast service, MBS) RB (MRB for short).

Based on the foregoing technical solution, the terminal device determines the first split ratio from the at least one split ratio of the first RB that is received in advance, to transmit the uplink data of the first RB. Because the at least one split ratio is indicated to the terminal device by the first access network device and the second access network device through negotiation, and a manner in which the terminal device determines the first split ratio is consistent with that of an access network device, the method provided in this application can ensure that a split ratio used on a network side is consistent with a split ratio used by the terminal device. This helps the first and second access network devices implement efficient resource scheduling, thereby improving uplink transmission efficiency.

Optionally, the first split ratio in the at least one split ratio is a ratio of any two of the following data volumes: a data volume of uplink data of the first RB that is split to the first access network device, a data volume of uplink data of the first RB that is split to the second access network device, or a data volume of the uplink data of the first RB.

Optionally, the first split ratio may be any split ratio in the at least one split ratio.

In a possible implementation, the terminal device determines the first split ratio based on the first information. In other words, when the terminal device does not receive other information indicating the first split ratio, the terminal device and the access network device determine a 1^{st} split ratio in the at least one split ratio as the first split ratio.

For example, the first split ratio is a 1^{st} split ratio in the at least one split ratio.

Based on this method, the first split ratio may not be indicated by using additional information, thereby reducing signaling overheads.

In another possible implementation, the terminal device determines the first split ratio based on second information, where the second information indicates the first split ratio.

The second information may be sent by the first access network device to the terminal device, or may be sent by the second access network device to the terminal device.

Based on this method, the terminal device can more flexibly determine the first split ratio from the at least one split ratio.

Optionally, the method further includes: receiving the second information from the first access network device.

For example, the second information includes an indication of the first RB and an indication of the first split ratio.

Optionally, the first information and the second information are carried in same radio resource control (radio resource control, RRC) signaling. For example, an RRC reconfiguration message indicates at least one split ratio of the first RB, and indicates the first split ratio.

Optionally, the first information is carried in RRC signaling, and the second information is carried in media access control (media access control, MAC) layer signaling, physical layer signaling, or a PDCP control packet data unit (packet data unit, PDU).

The MAC layer signaling may be, for example, a MAC control element (control element, CE) (MAC CE for short), and the physical layer signaling may be, for example, downlink control information (downlink control information, DCI).

In a possible implementation, the at least one split ratio corresponds to at least one duration and/or at least one data volume.

A duration #1 in the at least one duration indicates that the terminal device uses, on a per-duration-#1 basis, a split ratio corresponding to the duration #1. In other words, when splitting the uplink data of the first RB, the terminal device needs to ensure that a split ratio in any duration #1 satisfies the split ratio corresponding to the duration #1.

A data volume #4 in the at least one data volume indicates that the terminal device uses, on a per-data-volume-#4 basis, a split ratio corresponding to the data volume #4. In other words, when splitting the uplink data of the first RB, the terminal device needs to ensure that a split ratio for data of each data volume #4 satisfies the split ratio corresponding to the data volume #4. The data volume #4 may be a data size, or may be a quantity of data packets.

Based on this, the uplink data of the first RB can be split more accurately.

In a possible implementation, the method further includes: determining a first time period and/or a first data volume corresponding to the first split ratio.

For example, the terminal device may determine, based on the first split ratio and a correspondence between the first split ratio and the first duration and/or the first data volume, the first time period and/or the first data volume corresponding to the first split ratio.

The correspondence may be indicated by the first access network device or the second access network device.

Optionally, the method further includes: receiving fourth information, where the fourth information indicates a correspondence between at least one split ratio and the at least one duration and/or the at least one data volume, and the correspondence includes the correspondence between the first split ratio and the first duration and/or the first data volume. In this case, the fourth information and the first information may be carried in same RRC signaling.

Alternatively, the fourth information indicates the correspondence between the first split ratio and the first duration and/or the first data volume. In this case, the fourth information may be carried in MAC layer signaling, physical layer signaling, or a PDCP PDU.

In a possible implementation, transmitting the uplink data of the first RB based on the first split ratio includes: splitting the uplink data of the first RB based on the first split ratio, and determining first data and second data, where the first data corresponds to the first access network device, and the second data corresponds to the second access network device; transmitting the first data to the first access network device; and transmitting the second data to the second access network device.

Optionally, before the transmitting the first data to the first access network device, the method further includes: determining first buffer information based on the first data; and sending a first buffer status report (buffer status report, BSR) to the first access network device, where the first BSR includes the first buffer information.

Optionally, the method further includes: canceling a BSR that is triggered before the first BSR is sent but that has not been sent to the first access network device. The BSR is determined by the terminal device based on the uplink data on the first RB, instead of based on the first split ratio.

Optionally, before transmitting the second data to the second access network device, the method further includes: determining second buffer information based on the second data, and sending a second BSR to the second access network device, where the second BSR includes the second buffer information.

Optionally, the method further includes: canceling a BSR that is triggered before the second BSR is sent but that has not been sent to the second access network device.

According to a second aspect, this application provides a communication method, and the method may be applied to a communication apparatus. For example, the communication apparatus may be an access network device, may be a component (such as a chip or a chip system) disposed in the access network device, or may be a logical module or software that can implement all or some functions of the access network device. This is not limited in this application. For ease of understanding and description, the following describes the method by using a first access network device as an example of the communication apparatus.

For example, the method includes: determining first information, where the first information indicates at least one split ratio of a first RB, and the first RB is a split bearer between the first access network device and a terminal device and between a second access network device and the terminal device; and sending the first information.

For descriptions of the first RB and the at least one split ratio, refer to the first aspect. Details are not described herein again.

Based on the foregoing technical solution, the first access network device indicates the at least one split ratio of the first RB to the terminal device by using the first information, so that the terminal device can determine, from the at least one split ratio, the first split ratio that is for splitting the uplink data of the first RB. Because the at least one split ratio is indicated to the terminal device by a network side through negotiation, and a manner in which the terminal device determines the first split ratio is consistent with that of an access network device, the method in this application can ensure that a split ratio used on the network side is consistent with a split ratio used by the terminal device. This helps the first and second access network devices implement efficient resource scheduling, thereby improving uplink transmission efficiency.

In a possible implementation, the method further includes: sending second information, where the second information indicates the first split ratio in the at least one split ratio.

For example, the second information includes an indication of the first RB and an indication of the first split ratio.

Optionally, the first information and the second information are carried in same RRC signaling. Alternatively, the first information is carried in RRC signaling, and the second information is carried in MAC layer signaling, physical layer signaling, or a PDCP PDU.

In other words, the first information and the second information may be sent at the same time, or may be sent separately.

In a possible implementation, the at least one split ratio corresponds to at least one time period and/or at least one data volume.

For descriptions of the time period and the data volume, refer to the descriptions in the first aspect. Details are not described herein again.

Optionally, the method further includes: sending fourth information. For descriptions of the fourth information, refer to the descriptions in the first aspect. Details are not described herein again.

In a possible implementation, the method further includes: receiving third information from the second access network device, where the third information is for updating a split ratio.

Optionally, the third information includes an uplink transmission bit rate currently provided by the second access network device for the first RB, and/or an uplink transmission bit rate that is predicted by the second access network device and provided for the first RB.

Optionally, the third information includes a split ratio that the second access network device expects to use.

In a possible implementation, the method further includes: receiving a first message from the second access network device, where the first message is for determining the first information.

Based on this, an access network device may adjust a split ratio on a terminal device side in time based on an air interface resource change, so that the terminal device adjusts a split ratio in time based on a change of the air interface resource on an access network device side.

Optionally, the first message includes an uplink transmission bit rate provided by the second access network device for the first RB.

Optionally, sending the first information includes: sending the first information to the terminal device.

Optionally, the method further includes: sending the first information to the second access network device.

According to a third aspect, this application provides a communication method, and the method may be applied to a communication apparatus. For example, the communication apparatus may be an access network device, may be a component (such as a chip or a chip system) disposed in the access network device, or may be a logical module or software that can implement all or some functions of the access network device. This is not limited in this application. For ease of understanding and description, the following describes the method by using a second access network device as an example of the communication apparatus.

For example, the method includes: receiving first information, where the first information indicates at least one split ratio of a first RB, and the first RB is a split bearer between a first access network device and a terminal device and between the second access network device and the terminal device. The second access network device is an access network device that does not establish the first radio bearer RB.

Based on the foregoing technical solution, the second access network device may determine, based on the at least one split ratio of the first RB that is received in advance, a ratio for scheduling an uplink resource. Therefore, the method helps the first and second access network devices implement efficient resource scheduling, thereby improving uplink transmission efficiency.

In a possible implementation, the method further includes: sending a first message to the second access network device, where the first message is for determining the first information.

In a possible implementation, the first message includes an uplink transmission bit rate provided by the second access network device for the first RB.

In a possible implementation, third information is sent to the first access network device, where the third information is for updating a split ratio.

With reference to the third aspect, in some implementations of the third aspect, the third information includes an uplink transmission bit rate currently provided by the second access network device for the first RB, and/or an uplink transmission bit rate that is predicted by the second access network device and provided for the first RB.

According to a fourth aspect, this application provides a communication apparatus, including a module or a unit configured to implement the method according to any one of the aspects and any possible implementation of any one of the aspects. It should be understood that each module or unit may implement a corresponding function by executing a computer program.

According to a fifth aspect, this application provides a communication apparatus, including a processor, where the processor is configured to perform the method according to any one of the foregoing aspects and any possible implementation of any one of the foregoing aspects.

The apparatus may further include a memory, configured to store a computer program and/or a configuration file of a logic circuit. The memory is coupled to the processor. When the processor executes the instructions stored in the memory, the method described in the foregoing aspects may be implemented.

The apparatus may further include a communication interface. The communication interface is used by the apparatus to communicate with another device. For example, the communication interface may be a transceiver, a circuit, a bus, a module, or another type of communication interface.

According to a sixth aspect, this application provides a chip system. The chip system includes at least one processor, configured to support implementation of functions in any one of the foregoing aspects and any possible implementation of any one of the foregoing aspects, for example, receiving or processing data and/or information in the foregoing methods.

In a possible design, the chip system further includes a memory, the memory is configured to store program instructions and data, and the memory is located inside or outside the processor.

The chip system may include a chip, or may include a chip and another discrete component.

According to a seventh aspect, this application provides a computer-readable storage medium, including a computer program. When the computer program is run on a computer, the computer is enabled to implement the method according to any one of the aspects and any possible implementation of any one of the aspects.

According to an eighth aspect, this application provides a computer program product, where the computer program product includes a computer program (which may also be referred to as code or instructions); and when the computer program is run, a computer is enabled to perform the method according to any one of the foregoing aspects and any possible implementation of any one of the foregoing aspects.

According to a ninth aspect, this application provides a communication system, including the foregoing terminal device, the foregoing first access network device, and the foregoing second access network device. The terminal device is configured to perform the method according to any one of the first aspect and the possible implementations of the first aspect. The second access network device is configured to perform the method according to any one of the second aspect and the possible implementations of the second aspect. The second access network device is configured to perform the method according to any one of the third aspect and the possible implementations of the third aspect.

It should be understood that technical solutions in the fourth aspect to the ninth aspect of this application correspond to the technical solutions in the first aspect to the third aspect of this application, and beneficial effect achieved by the aspects and corresponding feasible implementations are similar. Details are not described.

### BRIEF DESCRIPTION OF DRAWINGS

FIG. 1 is a diagram of an architecture of a communication system to which a method according to an embodiment of this application is applicable;
FIG. 2 is a diagram of a DRB according to an embodiment of this application;
FIG. 3 is a schematic flowchart of a communication method according to an embodiment of this application;
FIG. 4 is another schematic flowchart of a communication method according to an embodiment of this application;
FIG. 5 is still another schematic flowchart of a communication method according to an embodiment of this application;
FIG. 6 and FIG. 7 each are a block diagram of an apparatus according to an embodiment of this application;
FIG. 8 is a structural diagram of a terminal device according to an embodiment of this application; and
FIG. 9 is a structural diagram of a radio access network device according to an embodiment of this application.

### DESCRIPTION OF EMBODIMENTS

The following describes technical solutions of this application with reference to accompanying drawings.

For ease of understanding of embodiments of this application, the following descriptions are first provided.

First, in embodiments of this application, prefix words such as "first" and "second" are merely used for distinguishing and describing different things belonging to a same name category, and are not intended to limit a sequence, sizes, or a quantity of things. For example, a "first access network device" and a "second access network device" are merely different devices, and a quantity of devices or a priority relationship is not limited. For another example, "first information" and "second information" are merely different pieces of information, and the "first information" and the "second information" do not have a size relationship or a priority relationship.

Second, "sending" and "receiving" in embodiments of this application indicate signal transfer directions. For example, "sending first information to a terminal device" may be understood as that a destination end of the first information is the terminal device, and may include direct sending through an air interface, or indirect sending through an air interface by another unit or module. "Receiving first information from a first access network device" may be understood as that a source end of the first information is the first access network device, and may include direct receiving from the first access network device through an air interface, or may include indirect receiving from the first access network device through an air interface from another unit or module. "Sending" may also be understood as "outputting" of a chip interface, and "receiving" may also be understood as "inputting" of the chip interface.

In other words, sending and receiving may be performed between devices, for example, between the terminal device and the first access network device, or may be performed in a device, for example, sending or receiving is performed between components, modules, chips, software modules, or hardware modules in the device through a bus, a cable, or an interface.

It may be understood that, before the information is sent from the source end to the destination end, necessary processing such as encoding and modulation may be performed. After receiving the information from the source end, the destination end may also perform corresponding processing such as decoding and demodulation, to interpret valid information from the source end. Similar descriptions in this application may be understood similarly, and details are not described again.

Third, in embodiments of this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between associated objects, but does not exclude an "and" relationship between the associated objects. A specific indicated meaning may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application.

It may be understood that, for a sender of the indication information, the indication information may indicate to-be-indicated information, and for a receiver of the indication information, the indication information may be for determining to-be-indicated information.

Fifth, in embodiments of this application, descriptions such as "when...", "in a case of...", "assuming that", and "if" all mean that a device (for example, a network device or a terminal device) performs corresponding processing in an objective case, are not intended to limit time, do not require the device (for example, a network device or a terminal device) to necessarily perform a determining action during implementation, and do not mean another limitation.

Sixth, predefinition in this application may be understood as definition, definition in advance, storage, prestorage, pre-negotiation, pre-configuration, solidifying, or pre-burning.

The technical solutions in this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system or a new radio access technology (new radio access technology, NR), or a satellite communication system. The 5G mobile communication system may include non-standalone (non-standalone, NSA) networking and/or standalone (standalone, SA) networking.

The technical solutions provided in this application may be further applied to a future communication system, for example, a 6th generation (6th generation, 6G) mobile communication system. This is not limited in this application.

A radio access network (radio access network, RAN) device in this application is a device having a wireless transceiver function. The radio access network device may provide a wireless communication function service, and may connect a terminal to a wireless network. The radio access network device may be a node in a radio access network, briefly referred to as a RAN node.

In a possible scenario, the RAN node may be a base station (base station, BS), an evolved NodeB (evolved NodeB, eNodeB), a transmission reception point (transmission reception point, TRP), a home base station (home evolved NodeB or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation base station in a 6G mobile communication system, a base station in a future mobile communication system, or the like. Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, or an internet of things (internet of things, IoT) communication system, or the like. Alternatively, the RAN node may be a RAN node in a non-terrestrial network (non-terrestrial network, NTN). In other words, the RAN node may be deployed on a high-altitude platform or a satellite.

The RAN node may be a macro base station, may be a micro base station or an indoor base station, may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a V2X technology may be a road side unit (road side unit, RSU). Certainly, the RAN node may alternatively be a node in a core network.

In another possible scenario, the plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP) or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU). For ease of description, the CU, the CU-CP, the CU-UP, the DU, and the RU are used as examples for description in this application.

Any one of the CU (or the CU-CP or the CU-UP), the DU, and the RU may be implemented by using a software module, a hardware module, or a combination of a software module and a hardware module. In other words, the radio access network device in this application may be a virtualized device, for example, implemented by using general-purpose hardware and an instantiated virtualization function, or by using dedicated hardware and an instantiated virtualization function. The general-purpose hardware may be a server, for example, a cloud server.

The terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device with a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in autonomous driving (autonomous driving), an uncrewed aerial vehicle, a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an IoT system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the terminal device may further include a sensor like an intelligent printer, a train detector, or a gas station, which mainly functions to collect data (a part of terminal devices), receive control information and downlink data from a network device, send an electromagnetic wave, and transmit uplink data to the network device.

The terminal device in this application may be a virtualized device, for example, implemented by using general-purpose hardware and an instantiated virtualization function, or by using dedicated hardware and an instantiated virtualization function. The general-purpose hardware may be a server, for example, a cloud server.

It should be understood that a specific form of the radio access network device and a specific form of the terminal device are not limited in this application.

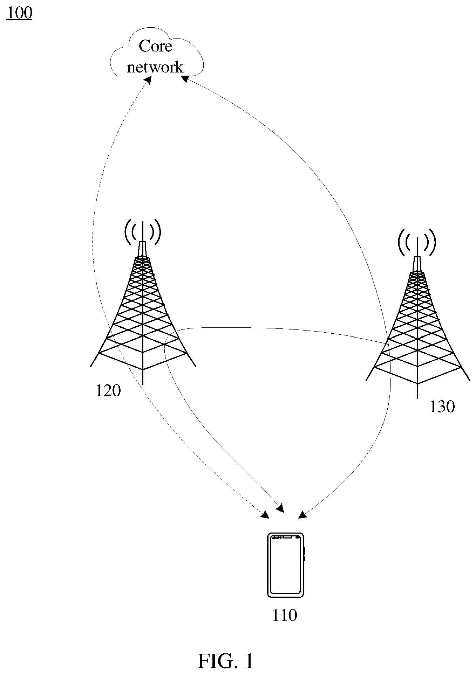

FIG. 1 is a diagram of an architecture of a communication system 100 to which a method according to an embodiment of this application is applicable. As shown in FIG. 1, the communication system 100 includes a terminal device 110, an access network device 120, an access network device 130, and a core network. When the terminal device 110 supports a dual connectivity function, the terminal device 110 may be connected to both the access network device 120 and the access network device 130, and the two access network devices provide services for the terminal device 110, to improve a transmission rate and reliability of the terminal device.

A dashed arrow shown in FIG. 1 represents a control plane connection between the terminal device 110 and a network. In this application, an access network device configured to carry a control plane connection is a primary access network device, that is, the access network device 120 is a primary access network device; and the other access network device is a secondary access network device, that is, the access network device 130 is a secondary access network device.

It should be understood that the secondary access network device is added by the primary access network device for the terminal device. For this process, refer to the conventional technology. Details are not described herein again. In other words, an access network device that is first accessed by the terminal device may be referred to as the primary access network device, and an access network device that is subsequently accessed by the terminal device may be referred to as the secondary access network device.

A solid arrow shown in FIG. 1 represents a data link between the terminal device 110 and the network. For downlink, after data is transmitted from the core network to the access network device 130, the access network device 130 may divide the data into two parts. One part is sent to the terminal device 110 through an air interface of the access network device 130, and the other part is sent to the access network device 120 through a communication interface (for example, an Xn or X2 interface), and then is sent to the terminal device 110 through an air interface of the access network device 120. For uplink, the terminal device 110 divides downlink data into two parts. One part is sent to the access network device 130 through the air interface of the access network device 130, and the other part is sent to the access network device 120 through the air interface of the access network device 120, and then is sent to the access network device 130 through the communication interface. The two parts of data are converged in the access network device 130, and the access network device 130 sends the converged data to the core network.

In other words, in the communication system shown in FIG. 1, a data anchor is located in the access network device 130 (the secondary access network device). Therefore, the access network device 130 may be referred to as a data anchor station. Optionally, this application also supports the data anchor being located in the primary access network device. For example, the data anchor is located in the access network device 120. When the access network device 120 is used as the data anchor station, for downlink, the access network device 120 distributes data; and for uplink, data convergence is completed at the access network device 120 side. For details, refer to the descriptions of the foregoing data anchor in the access network device 130. Details are not described herein again.

It should be understood that whether the data anchor is located in the primary access network device or the secondary access network device is determined by the primary access network device.

In this application, the primary access network device and the secondary access network device may be access network devices of different standards. For example, the primary access network device is an NR base station and the secondary base station is a 6G base station; or the primary base station is a 6G base station and the secondary base station is an NR base station. Optionally, the primary access network device and the secondary access network device may also be access network devices of a same standard, for example, both are 6G base stations. Standards of the primary access network device and the primary access network device are not limited in this application.

It should be understood that FIG. 1 is merely a diagram. The communication system may further include other devices, which are not shown in FIG. 1.

The data link shown in FIG. 1 is a split bearer, and means that one bearer uses both the air interface of the primary access network device and the air interface of the secondary access network device for data transmission. The split bearer includes a split bearer with a data anchor located on the primary access network device and a split bearer with a data anchor located on the secondary access network device. In a DC scenario, user plane data needs to be transmitted between an access network device and a terminal device via a data radio bearer (data radio bearer, DRB). The DRB includes a service data adaptation protocol (service data adaptation protocol, SDAP) entity, a PDCP entity, an RLC entity, a MAC entity, a series of resources allocated by a physical (physical, PHY) layer, and the like.

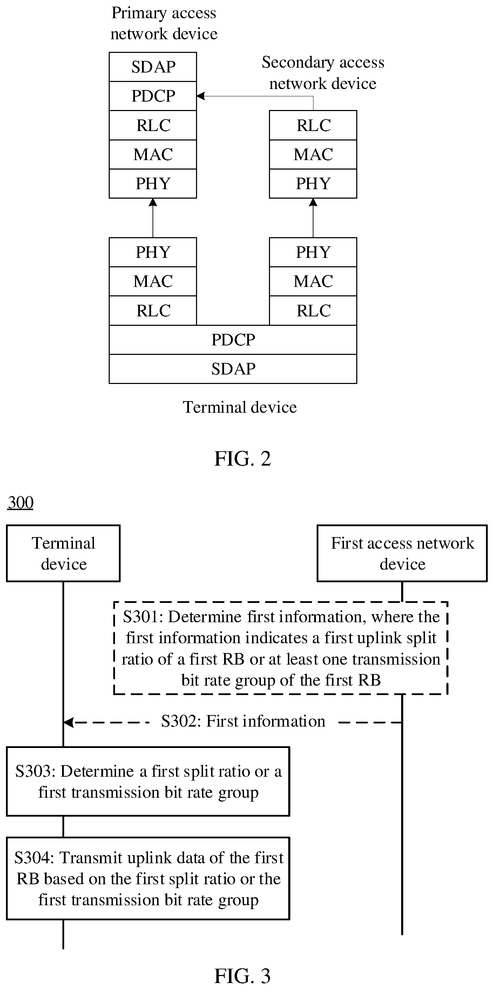

FIG. 2 is a diagram of a DRB according to an embodiment of this application. As shown in FIG. 2, a type of the DRB is a split bearer. If a primary access network device establishes a split bearer of the DRB (or a split bearer with a data anchor located on the primary access network device is used), in a downlink direction, a PDCP layer of the primary access network device splits, to a secondary access network device, downlink data delivered by a core network. In an uplink direction, if uplink splitting is supported, the primary and secondary access network devices separately receive uplink data from a terminal device, and then the secondary access network device sends the received uplink data to the primary access network device. If the uplink data needs to be delivered in sequence, the primary access network device reorders, at the PDCP layer, uplink data respectively received by the primary access network device and the secondary access network device, and then sends the received data to the core network in sequence.

It may be understood that, for the split bearer, the data transmitted by the primary access network device and the data transmitted by the secondary access network device may be different data of a same type of service.

In this application, an access network device configured to establish the split bearer of the DRB may be referred to as a data anchor station of the DRB or a PDCP anchor station of the DRB.

As described above, regardless of whether the split bearer has the data anchor on the primary access network device or the data anchor on the secondary access network device, in an uplink direction, the data anchor station needs to reorder, at a PDCP layer, uplink data received by the primary access network device and the secondary access network device, and then send the uplink data to the core network in sequence. Therefore, when the data received by the primary access network device and the secondary access network device is converged at the PDCP layer of the data anchor station, it is desirable that a difference between PDCP sequence numbers is not excessively large. To ensure a small difference between sequence numbers of data arriving at the PDCP layer from the terminal device, a PDCP anchor station and a non-PDCP anchor station need to receive a BSR of the terminal device, and perform uplink scheduling based on the BSR of the terminal device.

However, a buffer size included in a BSR sent by the terminal device to the primary access network device includes a size of data buffered at a PDCP layer of the terminal device and a size of data that has been distributed from the PDCP layer to an RLC layer corresponding to the primary access network device; a buffer size included in a BSR sent by the terminal device to the secondary access network device includes the size of the data buffered at the PDCP layer of the terminal device and a size of data that has been distributed from the PDCP layer to an RLC layer corresponding to the secondary access network device. Because the data buffered at the PDCP layer also needs to be finally distributed to the primary and secondary access network devices, the buffer sizes included in the BSRs reported by the terminal device to the primary and secondary access network devices need to include the size of the data that has been distributed from the PDCP layer to the RLC layer corresponding to the primary access network device and sizes of data that is finally distributed to the RLC layers corresponding to the primary and secondary access network devices in the data buffered at the PDCP layer. The RLC layer corresponding to the primary access network device may be referred to as a logical channel corresponding to the primary access network device, and the RLC layer corresponding to the secondary access network device may also be referred to as a logical channel corresponding to the secondary access network device.

To avoid that the primary and secondary base stations have an incorrect understanding of the buffer size included in the BSR reported by the terminal, as recommended in the current protocol, the terminal device performs as few RLC packet splitting as possible or not perform RLC packet splitting in the split bearer scheme, to ensure that the buffer size included in the BSR reported by the terminal device is the size of the data buffered at the PDCP layer. In this way, when performing uplink scheduling, the primary and secondary access network devices can consider that the buffer size included in the BSR is the size of the data buffered at the PDCP layer, so that the non-PDCP anchor station performs uplink scheduling based on a transmission bit rate committed by the non-PDCP anchor station, and the PDCP anchor station performs uplink scheduling based on a transmission bit rate obtained by subtracting the transmission bit rate of the non-PDCP anchor station from a total transmission bit rate, to implement efficient data transmission.

However, during actual communication, to accelerate a data processing speed, the terminal device may split, in advance before receiving uplink scheduling information, the data buffered at the PDCP layer. A split ratio is determined by the terminal device according to an algorithm of the terminal device. Before performing uplink scheduling, the network side may calculate a resource scheduling ratio based on splitting of quality of service (quality of service, QoS). If the resource scheduling ratio calculated by the network side is inconsistent with the split ratio of the terminal device, it may result in one of the primary and secondary access network devices having more scheduled resources than needed, leading to waste, while the other access network device has insufficient scheduled resources, causing transmission backlogs. Consequently, the primary and secondary access network devices cannot implement efficient resource scheduling, and therefore an uplink transmission rate is affected.

In view of this, embodiments of this application provide a communication method, a related apparatus, and a communication system. In the method, a primary access network device and a secondary access network device deliver, to a terminal device in advance, a split ratio negotiated by the two devices, so that the terminal device splits buffered data based on the split ratio indicated by a network side, thereby effectively avoiding a problem of low uplink transmission rate caused by inconsistency between a split ratio determined by the terminal device and a resource scheduling ratio determined by the network side.

It should be understood that the method provided in embodiments of this application may be applied to the scenario shown in FIG. 1, or may be applied to another scenario in which the foregoing problem exists. An applicable scenario is not limited in embodiments of this application.

The following describes in detail the communication method provided in embodiments of this application with reference to FIG. 3. The method provided in this application may be applied to the network architecture shown in FIG. 1, but embodiments of this application are not limited thereto. In this application, a first access network device is used as a data anchor station for description. It should be understood that the first access network device may be a primary access network device, or may be a secondary access network device.

In a flowchart shown in FIG. 3, the method is shown from a perspective of interaction between a terminal device and an access network device. However, an execution body of the method is not limited in this application. For example, the first access network device in FIG. 3 may be replaced with a chip, a chip system, or a processor that supports the first access network device in implementing the method, or may be a logical module or software that can implement all or some functions of the first access network device. A second access network device in FIG. 3 may be replaced with a chip, a chip system, or a processor that supports the second access network device in implementing the method, or may be a logical module or software that can implement all or some functions of the second access network device. The terminal device in FIG. 3 may be replaced with a chip, a chip system, or a processor that supports the terminal device in implementing the method, or may be a logical module or software that can implement all or some functions of the terminal device.

FIG. 3 is a schematic flowchart of a communication method 300 according to an embodiment of this application. As shown in FIG. 3, the method 300 may include S301 to S304. The following describes the steps of the method 300 in detail.

Optionally, in S301, the first access network device determines first information, where the first information indicates at least one split ratio of a first RB or indicates at least one transmission bit rate group of the first RB.

In a possible implementation, the first access network device is an O-CU or a CU. In other words, S301 may be replaced with the following: The O-CU or the CU determines the first information.

The first RB is a split bearer between the first access network device, and the terminal device and between the second access network device and the terminal device. Alternatively, the first RB is a split bearer established by the first access network device for a QoS flow of the terminal device. Therefore, the first RB and the QoS flow in this application may be equivalently replaced.

It may be understood that the first information may further indicate at least one split ratio of a second RB or indicate at least one transmission bit rate group of the second RB.

For example, the RB in this application may be a DRB, an SRB, an MRB, or the like.

In a possible implementation, the first information indicates the at least one split ratio of the first RB.

Optionally, a quantity of the at least one split ratio of the first RB indicated by the first information is one. For example, the first information indicates a split ratio #1 of the first RB, and the split ratio #1 is a ratio of any two of the following data volumes: a data volume of uplink data of the first RB that is split to the first access network device (referred to as a data volume #1 below for ease of description), a data volume of uplink data of the first RB that is split to the second access network device (referred to as a data volume #2 below for ease of description), or a data volume of uplink data of the first RB (referred to as a data volume #3 below for ease of description).

For example, the split ratio #1 may be a ratio of the data volume #1 to the data volume #2, or a ratio of the data volume #2 to the data volume #3; the split ratio #1 may be a ratio of the data volume #1 to the data volume #3, or a ratio of the data volume #3 to the data volume #1; the split ratio #1 may be a ratio of the data volume #2 to the data volume #3, or a ratio of the data volume #3 to the data volume #2.

Optionally, a quantity of the at least one split ratio of the first RB indicated by the first information is multiple. For example, the first information indicates a split ratio #2 and a split ratio #3 of the first RB, and the split ratio #2 and the split ratio #3 may be ratios of any two of the following data volumes: a data volume #1, a data volume #2, or a data volume #3.

For example, the split ratio #2 is a ratio of the data volume #1 to the data volume #2, or a ratio of the data volume #2 to the data volume #3; the split ratio #2 may be a ratio of the data volume #1 to the data volume #3, or a ratio of the data volume #3 to the data volume #1; the split ratio #2 may be a ratio of the data volume #2 to the data volume #3, or a ratio of the data volume #3 to the data volume #2.

For example, the split ratio #3 may be a ratio of the data volume #1 to the data volume #2, or a ratio of the data volume #2 to the data volume #3; the split ratio #3 may be a ratio of the data volume #1 to the data volume #3, or a ratio of the data volume #3 to the data volume #1; the split ratio #3 may be a ratio of the data volume #2 to the data volume #3, or a ratio of the data volume #3 to the data volume #2.

It may be understood that the two data volumes corresponding to the split ratio #2 may be the same as or different from the two data volumes corresponding to the split ratio #3. For example, the two data volumes corresponding to the split ratio #2 and the two data volumes corresponding to the split ratio #3 are both the data volume 1 and the data volume 2. For another example, the two data volumes corresponding to the split ratio #2 are the data volume #1 and the data volume #2, and the two data volumes corresponding to the split ratio #3 are the data volume #1 and the data volume #3.

Optionally, the first information may indicate a plurality of split ratios by using a split ratio list, and the plurality of split ratios may include one initial split ratio and at least one candidate split ratio.

In another possible implementation, the first information indicates the at least one transmission bit rate group of the first RB.

Optionally, a quantity of the at least one transmission bit rate group of the first RB indicated by the first information is one. For example, the first information indicates a transmission bit rate group #1 of the first RB, and the transmission bit rate group #1 includes at least one of the following transmission bit rates: an uplink transmission bit rate provided by the first access network device for the first RB (referred to as a transmission bit rate #1 below for ease of description), or an uplink transmission bit rate provided by the second access network device for the first RB (referred to as a transmission bit rate #2 below for ease of description).

Optionally, a quantity of the at least one transmission bit rate group of the first RB indicated by the first information is multiple. For example, the first information indicates a transmission bit rate group #2 and a transmission bit rate group #3 of the first RB, and the transmission bit rate group #2 and the transmission bit rate group #3 each include at least one of the following transmission bit rates: a transmission bit rate #1 or a transmission bit rate #2.

It may be understood that a transmission bit rate included in the transmission bit rate group #2 may be the same as or different from a transmission bit rate included in the transmission bit rate group #3. For example, both transmission bit rates included in the transmission bit rate group #2 and transmission bit rates included in the transmission bit rate group #3 are the transmission bit rate #1 and the transmission bit rate #2. For another example, a transmission bit rate included in the transmission bit rate group #2 is the transmission bit rate #1, and a transmission bit rate included in the transmission bit rate group #3 is the transmission bit rate #2.

Similar to the plurality of split ratios, the first information may indicate the plurality of transmission ratio rate groups by using a transmission ratio rate list, and the plurality of transmission bit rate groups may include one initial transmission bit rate group and at least one candidate transmission bit rate group.

Optionally, in S302, the first access network device sends the first information to the terminal device. Correspondingly, the terminal device receives the first information from the first access network device.

With reference to the example in which the first access network device is an O-CU or a CU, when the first access network device is an O-CU or a CU, that the first access network device sends the first information to the terminal may include: The O-CU or the CU sends the first information to an O-DU or a DU through a first interface; and the O-DU or the DU sends the first information to the terminal device via an RU after receiving the first information. The first interface is an interface between the O-CU (or the CU) and the O-DU (or the DU).

In this embodiment of this application, that the first access network device sends information or a message (for example, the first information) to the terminal device may be understood as that the first access network device sends the information or the message to the terminal device via one or more network elements. For example, the first access network device is a CU, and the CU sends the first information to the terminal device via a DU and an RU.

Similarly, that the terminal device receives information or a message (for example, the first information) from the first access network device may be understood as that the terminal device receives the information or the message from the first access network device via one or more network elements. For example, the first access network device is a CU, and the terminal device receives the first information from the CU via an RU and a DU.

The first information may be carried in RRC signaling.

Optionally, the first access network device may directly send the first information to the terminal device. Alternatively, the first access network device sends the first information to the terminal device through an air interface of the first access network device.

For example, when the first access network device is a primary access network device, the first access network device may directly send the first information to the terminal device.

Optionally, when the first access network device is a primary access network device, the method 300 further includes: The first access network device sends, to the second access network device, information indicating the at least one split ratio of the first RB.

For example, the first access network device is a secondary access network device. After the terminal device accesses the first access network device, the first access network device may directly send the first information to the terminal device.

Optionally, the first access network device sends the first information to the terminal device via the second access network device. Alternatively, the first access network device sends the first information to the terminal through an air interface of the second access network device.

For example, the first access network device is a secondary access network device. Before the terminal device accesses the first access network device, the first access network device sends the first information to the terminal device via the second access network device.

In S303, the terminal device determines a first split ratio or a first transmission bit rate group.

The first split ratio belongs to the at least one split ratio of the first RB, and the first transmission bit rate group belongs to the at least one transmission bit rate group of the first RB.

In a possible implementation, when the first information indicates the at least one transmission bit rate group of the first RB, S303 may be replaced with the following: The terminal device determines the first transmission bit rate group.

With reference to the descriptions in S301, when the first information indicates one transmission bit rate group of the first RB, the first transmission bit rate group is the transmission bit rate group #1. When the first information indicates a plurality of transmission bit rate groups of the first RB, the first transmission bit rate group may be any one of the plurality of transmission bit rate groups. For example, the first transmission bit rate group is the transmission bit rate group #2 or the transmission bit rate group #3.

Optionally, the first transmission bit rate group is a 1^{st} transmission bit rate group in the at least one transmission bit rate group of the first RB.

For example, when the first information indicates the at least one transmission bit rate group of the first RB in a form of a transmission bit rate list, the 1^{st} transmission bit rate group may be a transmission bit rate group in a 1^{st} row or a 1^{st} column of the transmission bit rate list.

Optionally, the terminal device determines the first transmission bit rate group based on second information.

The second information indicates the first transmission bit rate group of the first RB. The first transmission bit rate group may be indicated by the first access network device or the second access network device to the terminal device.

In another possible implementation, when the first information indicates the at least one split ratio of the first RB, S303 may be replaced with the following: The terminal device determines the first split ratio.

With reference to the descriptions in S301, when the first information indicates one split ratio of the first RB, the first split ratio may be the split ratio #1; or when the first information indicates a plurality of split ratios of the first RB, the first split ratio may be any one of the plurality of split ratios. For example, the first split ratio is the split ratio #2 or the split ratio #3.

Optionally, the first split ratio is a 1^{st} split ratio in the at least one split ratio of the first RB.

For example, when the first information indicates the at least one split ratio in a form of a split ratio list, the 1^{st} split ratio may be a split ratio in a 1^{st} row or a 1^{st} column of the split ratio list.

Optionally, the terminal device determines the first split ratio based on second information.

The second information indicates the first split ratio. The first split ratio may be indicated by the first access network device or the second access network device to the terminal device.

In S304, the terminal device transmits uplink data of the first RB based on the first split ratio or the first transmission bit rate group.

S304 is related to S303. If the terminal device determines the first split ratio in S303, the terminal device transmits the uplink data of the first RB based on the first split ratio in S304. If the terminal device determines the first transmission bit rate group in S303, the terminal device transmits the uplink data of the first RB based on the first transmission bit rate group in

S304.

In a possible implementation, that the terminal device transmits the uplink data of the first RB based on the first split ratio may include: The terminal device splits the uplink data of the first RB based on the first split ratio, to determine first data and second data; and the terminal device transmits the first data to the first access network device, and transmits the second data to the second access network device. The first data corresponds to the first access network device, and the second data corresponds to the second access network device.

It may be understood that splitting in this application is performed by a PDCP entity of the first RB on the terminal device. That is, the PDCP entity of the first RB on the terminal device splits the uplink data of the first RB based on the first split ratio.

It may be further understood that a data volume of the first data is the data volume #1 described above, and a data volume of the second data is the data volume #2 described above, and the data volume of the first data and the data volume of the second data are the data volume #3 described above.

In another possible implementation, that the terminal device transmits the uplink data of the first RB based on the first transmission bit rate group may include: The terminal device determines the transmission bit rate #1 and the transmission bit rate #2 based on a transmission bit rate included in the first transmission bit rate group; and the terminal device transmits the uplink data of the first RB based on the transmission bit rate #1 and the transmission bit rate #2.

For example, that the terminal device transmits the uplink data of the first RB based on the transmission bit rate #1 and the transmission bit rate #2 may include: The terminal device determines the first split ratio based on the transmission bit rate #1 and the transmission bit rate #2; and transmits the uplink data of the first RB based on the first split ratio. For example, the terminal device uses a ratio of the transmission bit rate #1 to the transmission bit rate #2 as the first split ratio.

It should be noted that, if any transmission bit rate group includes only one of the transmission bit rate #1 and the transmission bit rate #2, the terminal device may determine the

other transmission bit rate based on the transmission bit rate included in the transmission bit rate group and a total transmission bit rate of the first RB. A total transmission bit rate of an RB may be determined by the terminal device based on a transmission bit rate of a QoS flow from a core network and a mapping relationship between a QoS flow and an RB from an access network device.

In this embodiment of this application, the first access network device indicates the at least one split ratio of the first RB to the terminal device by using the first information, so that the terminal device can determine, from the at least one split ratio, the first split ratio that is for splitting the uplink data of the first RB. Because the at least one split ratio is indicated to the terminal device by a network side through negotiation, the method in this application can ensure that a split ratio used on the network side is consistent with a split ratio used by the terminal device. This helps the first and second access network devices implement efficient resource scheduling, thereby improving uplink transmission efficiency.

Optionally, the method 300 further includes: The first access network device or the second access network device determines the second information for the terminal device; and sends the second information to the terminal device. Correspondingly, the terminal device receives the second information.

The second information and the first information may be sent together, or may be sent separately.

Example 1: The second information and the first information are carried in same RRC signaling.

A manner of sending the second information is the same as that of sending the first information: The first access network device may directly send the second information to the terminal device, or the first access network device sends the second information to the terminal device via the second access network device. For more detailed descriptions, refer to the foregoing descriptions in S302. Details are not described herein again.

For example, when the second information is carried in same RRC signaling, the first access network device or the second access network device is an O-CU or a CU. In other words, the O-CU or the CU determines the second information.

When the first access network device or the second access network device is an O-CU or a CU, that the first access network device or the second access network device sends the second information to the terminal device may include: The O-CU or the CU sends the second information to an O-DU or a DU through a first interface; and the O-DU or the DU sends the second information to the terminal device via an RU after receiving the second information. The first interface is an interface between the O-CU (or the CU) and the O-DU (or the DU).

Example 2: The first information is carried in RRC signaling, and the second information is carried in MAC layer signaling (for example, a MAC CE), physical layer signaling (for example, DCI), or a PDCP PDU.

The first information and the second information may be sent by a same access network device or different access network devices to the terminal device.

Optionally, the second information includes an indication of the first RB and an indication of the first split ratio.

The first RB may be indicated by using an identifier of the first RB, and the first split ratio may be indicated by using an index corresponding to the first split ratio, or a location of the first split ratio in the at least one split ratio.

For example, when the second information is carried in MAC layer signaling (for example, a MAC CE), physical layer signaling (for example, DCI), or a PDCP PDU, the first access network device or the second access network device is an O-DU or a DU.

When the first access network device is an O-DU or a DU, that the first access network device or the second access network device sends the second information to the terminal device may include: The O-DU or the DU sends the second information to the terminal device via an RU. Optionally, the O-DU or the DU sends the second information to an O-CU or a CU through a first interface, where the first interface is an interface between the O-CU (or the CU) and the O-DU (or the DU).

Optionally, in this embodiment of this application, the access network device may not send the first information to the terminal device, but directly indicate the first split ratio or the first transmission bit rate group to the terminal device by using the second information carried in the MAC layer signaling, the physical layer signaling, or the PDCP PDU. The second information includes the indication of the first RB and the first split ratio.

Optionally, the at least one split ratio (or the at least one indicated transmission bit rate group of the first RB) of the first RB corresponds to at least one duration and/or at least one data volume.

The following uses a split ratio as an example to describe a relationship between the split ratio and duration and/or a data volume. It should be understood that the split ratio described below may be replaced with the transmission bit rate group.

A duration #1 in the at least one duration indicates that the terminal device uses, on a per-duration-#1 basis, a split ratio corresponding to the duration #1. In other words, when splitting the uplink data of the first RB, the terminal device needs to ensure that a split ratio in any duration #1 satisfies the split ratio corresponding to the duration #1.

A data volume #4 in the at least one data volume indicates that the terminal device uses, on a per-data-volume-#4 basis, a split ratio corresponding to the data volume #4. In other words, when splitting the uplink data of the first RB, the terminal device needs to ensure that a split ratio for data of each data volume #4 satisfies the split ratio corresponding to the data volume #4. The data volume #4 may be a data size, or may be a quantity of data packets.

In a possible implementation, the at least one split ratio of the first RB corresponds to the at least one duration and the at least one data volume. A quantity of the at least one split ratio may be the same as or different from a quantity of the at least one duration, a quantity of the at least one split ratio may be the same as or different from a quantity of the at least one data volume, and the quantity of the at least one duration may also be the same as or different from the quantity of the at least one data volume.

For example, each of the at least one split ratio corresponds to at least one duration and at least one data volume. Alternatively, when the at least one split ratio is N (N is an integer greater than 1) split ratios, and the N split ratios may be divided into a plurality of groups (each group includes a plurality of split ratios), each group of split ratios may correspond to one duration and one data volume; or a part of the N split ratios correspond to the at least one time period, and remaining split ratios correspond to the at least one data volume.

In a possible implementation, the at least one split ratio of the first RB corresponds to the at least one duration or the at least one data volume. A quantity of the at least one split ratio may be the same as or different from a quantity of the at least one duration (or the at least one data volume).

For example, each of the at least one split ratio corresponds to at least one duration or at least one data volume. Alternatively, when the at least one split ratio is N split ratios, and the N split ratios may be divided into a plurality of groups (each group includes a plurality of split ratios), each group of split ratios may correspond to the at least one duration or the at least one data volume.

Optionally, the method 300 further includes: The first access network device or the second access network device sends fourth information to the terminal device, where the fourth information indicates a correspondence between the at least one split ratio of the first RB and the at least one duration and/or the at least one data volume. Correspondingly, the terminal device receives the fourth information.

The fourth information and the first information may be sent simultaneously (for example, the fourth information and the first information are carried in same RRC signaling) or separately.

Optionally, the method 300 further includes: The terminal device determines a first duration and/or a first data volume corresponding to the first split ratio.

For example, the terminal device may determine the first duration and/or the data volume based on the determined first split ratio and the correspondence that is between the split ratio and the duration and/or the data volume and that is indicated by the fourth information.

Alternatively, the terminal device determines the first duration and/or the first data volume based on fifth information. The fifth information indicates a correspondence between the first split ratio and the first duration and/or the first data volume. The fifth information may be sent by an access network device to the terminal device.

For example, the fifth information may be carried in MAC layer signaling (for example, a MAC CE), physical layer signaling (for example, DCI), or a PDCP PDU. Therefore, when the access network device sends the second information to the terminal device, the fifth information and the second information may be sent simultaneously or separately.

Optionally, before the terminal device transmits the first data to the first access network device, the method 300 further includes: The terminal device determines first buffer information based on the first data; and sends a first BSR to the first access network device, where the first BSR includes the first buffer information. Correspondingly, the first access network device receives the first BSR, and performs uplink scheduling based on the first BSR.

Optionally, before the first BSR is sent to the first access network device, the method 300 further includes: The terminal device cancels a BSR that is triggered before the first BSR is sent but that has not been sent to the first access network device, where buffer information included in the BSR is obtained through calculation based on the uplink data of the first RB, but is not determined based on the split ratio indicated by the first information.

Optionally, before the terminal device transmits the second data to the second access network device, the method 300 further includes: The terminal device determines second buffer information based on the second data; and sends a second BSR to the second access network device, where the second BSR includes the second buffer information. Correspondingly, the second access network device receives the second BSR, and performs uplink scheduling based on the second BSR.

Optionally, before the second BSR is sent to the second access network device, the method 300 further includes: The terminal device cancels a BSR that is triggered before the second BSR is sent but that has not been sent to the second access network device, where buffer information included in the BSR is obtained through calculation based on the uplink data of the first RB, but is not determined based on the split ratio indicated by the first information.

It should be noted that the at least one split ratio of the first RB or the at least one transmission bit rate group of the first RB in this application may be determined by an access network device for the first time and sent to the terminal device, or may be determined by an access network device and sent to the terminal device when an air interface resource of the access network device changes.

In a possible implementation, the first information is sent by the primary access network device to the terminal device by using an RRC reconfiguration message before the terminal device accesses the secondary access network device.

It may be understood that when the primary access network device is not the first access network device, before the primary access network device sends the first information to the terminal device by using the RRC reconfiguration message, the first access network device further needs to send the first information to the primary access network device.

In another possible implementation, the first information is sent by the first access network device or the second access network device to the terminal device by using an RRC reconfiguration message after the terminal device determines the split ratio and when a transmission bit rate on the first access network device or the second access network device changes. In other words, the first information is for updating a most recently determined split ratio.

Optionally, the method 300 further includes: The first access network device receives third information from the second access network device, where the third information is for updating a split ratio. In this case, that the first access network device determines the first information includes: The first access network device determines the first information based on the third information.

For example, the third information may include an uplink transmission bit rate currently provided by the second access network device for the first RB, and/or an uplink transmission bit rate that is predicted by the second access network device and provided for the first RB.

Optionally, when the third information includes the uplink transmission bit rate that is predicted by the second access network device and provided for the first RB, the third information may further include a predicted duration corresponding to the uplink transmission bit rate. The predicted duration corresponding to the uplink transmission bit rate means that the second access network device may transmit the uplink data within the predicted duration by using the uplink transmission bit rate.

Similar to the first information, the second information may be sent by the first access network device or the second access network device to the terminal device before the terminal device determines the first split ratio. Alternatively, the second information is sent by the first access network device or the second access network device to the terminal device after the terminal device determines a split ratio (for example, the determined split ratio is the split ratio #1), to update a most recently determined split ratio (for example, update the split ratio #1 to the split ratio #3).

Optionally, the method 300 further includes: The first access network device receives third information from the second access network device, where the third information is for updating a split ratio. In this case, that the first access network device determines the second information includes: The first access network device determines the second information based on the third information.

For more detailed descriptions of the third information, refer to the foregoing related descriptions. Details are not described herein again.

Optionally, the method 300 further includes: The second access network device sends a first message to the first access network device, where the first message is for determining the first information. Correspondingly, the first access network device receives the first message from the second access network device.

For example, the first message includes an uplink transmission bit rate provided by the second access network device for the first RB. In other words, the first message indicates a QoS guarantee that can be provided by the second access network device for the QoS flow of the terminal device. The QoS guarantee is essentially a QoS parameter. The QoS parameter indicates a QoS requirement that the second access network device can guarantee for the QoS flow if participating in transmission of the QoS flow of the terminal device. The QoS parameter includes the uplink transmission bit rate.

For example, the first message includes a split ratio that the second access network device expects to use.

It may be understood that the first message may include one or more uplink transmission bit rates or expected split ratios.

Optionally, the method 300 further includes: The second access network device sends, to the terminal device, the uplink transmission bit rate provided by the second access network device for the first RB, to assist the terminal device in making a split decision.

In a possible scenario, the first access network device is a secondary access network device, and the second access network device is a primary access network device.

Optionally, after the first access network device receives the first message from the second access network device, the method 300 further includes: The first access network device sends a second message to the second access network device, where the second message includes an uplink transmission bit rate that the second access network device needs to provide for the first RB. Correspondingly, the second access network device receives the second message from the first access network device.

The second message is a response message of the first message, and the first message is for requesting to establish an SDAP or a PDCP of a QoS flow of the terminal device on the first access network device.

Optionally, before the first access device sends the second message to the second access network device, the method 300 further includes: The first access device establishes the first RB for the QoS flow of the terminal device, and includes the first RB in the second message. That is, the second message may further include the first RB.

In another possible scenario, the first access network device is a primary access network device, and the second access network device is a secondary access network device.

Optionally, before the first access network device receives the first message from the second access network device, the method 300 further includes: The first access network device sends the second message to the second access network device, where the second message is for requesting the uplink transmission bit rate provided by the second access network device for the first RB.

The first message is a response message of the second message.

Optionally, the second message further indicates the first access network device to establish an RLC bearer for the first RB.

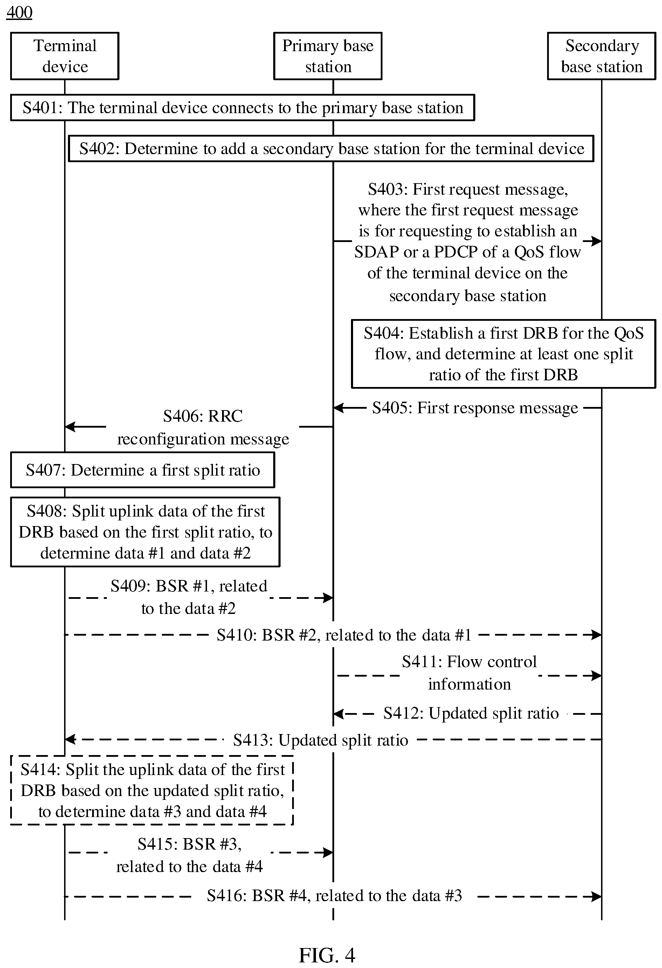

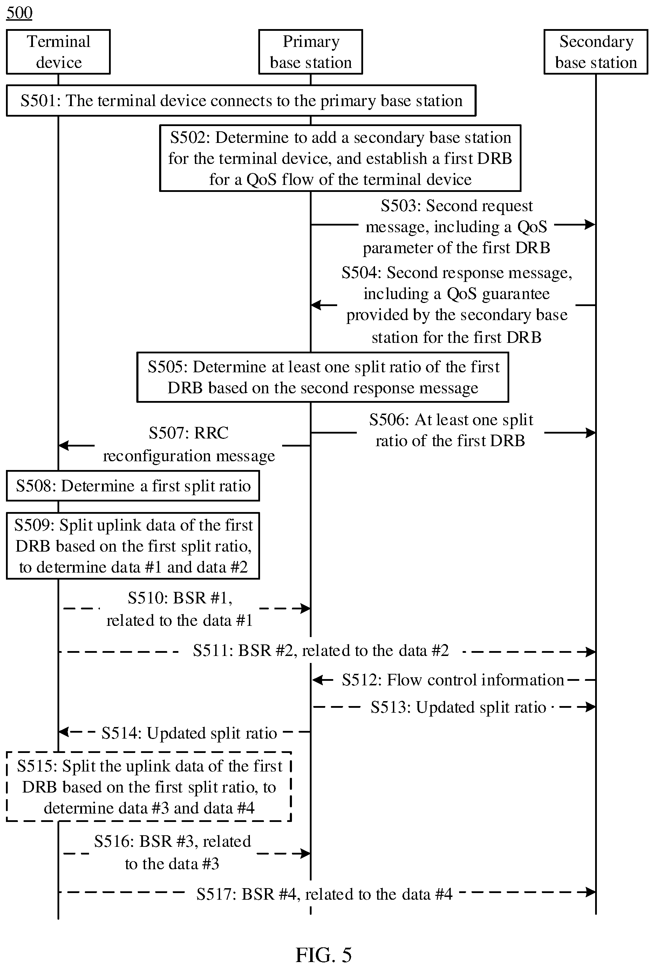

Based on the embodiment shown in FIG. 3, the following describes in more detail the communication method provided in this application with reference to FIG. 4 and FIG. 5. In the communication methods shown in FIG. 4 and FIG. 5, a base station is used as an example of an access network device for description. More specifically, in FIG. 4, a primary base station is used as an example of a second access network device, and a secondary base station is used as an example of a first access network device; in FIG. 5, a primary base station is used as an example of a first access network device and a secondary base station is used as an example of a second access network device. In the communication methods shown in FIG. 4 and FIG. 5, descriptions are provided by using a first DRB as an example of a first RB and by using an example in which first information indicates at least one split ratio of the first DRB.

It should be noted that, in the embodiments shown in FIG. 4 and FIG. 5, for steps that are the same as or similar to those in the embodiment shown in FIG. 3, refer to the foregoing related descriptions with reference to the method 300. Details are not described again.

The following uses an example in which a data anchor of a split bearer is on a secondary base station to describe in detail, with reference to FIG. 4, a method provided in an embodiment of this application.

FIG. 4 is another schematic flowchart of a communication method 400 according to an embodiment of this application. As shown in FIG. 4, the method 400 includes S401 to S416. The following describes the steps of the method 400 in detail.

S401: A terminal device connects to a primary base station.

S402: The primary base station determines to add a secondary base station for the terminal device.

For example, when the primary base station is split into a CU #2 (or an O-CU #2) and a DU #2 (or an O-DU #2), S402 may be replaced with the following: The CU #2 (or the O-CU #2) determines to add the secondary base station for the terminal device.

S403: The primary base station sends a first request message to the secondary base station, where the first request message is for requesting to establish an SDAP or a PDCP of a QoS flow of the terminal device on the secondary base station. Correspondingly, the secondary base station receives the first request message.

Optionally, the first request message further indicates a QoS guarantee that can be provided by the primary base station for the QoS flow. The QoS guarantee may be a QoS parameter, and the QoS parameter includes an uplink transmission bit rate. Alternatively, the first request message further indicates an uplink transmission bit rate that can be provided by the primary base station for the QoS flow.

The first request message may be understood as the first message in the method 300.

Similar to the primary base station, the secondary base station is split into a CU #1 (or an O-CU #1) and a DU #1 (or an O-DU #1). Based on the example in which the primary base station is split into the CU #2 (or the O-CU #2) and the DU #2 (or the O-DU #2), S403 may be replaced with the following: The CU #2 (or the O-CU #2) sends the first request message to the DU #2 (or the O-DU #2), the DU #2 (or the O-DU #2) sends the first request message to the DU #1 (or the O-DU #1), and the DU #1 (or the O-DU #1) sends the first request message to the CU #1 (or the O-CU #1).

It may be understood that the DU #2 (or the O-DU #2) may send the first request message to the DU #1 (or the O-DU #1) via an RU. Similarly, the DU #1 (or the O-DU #1) receives the first request message from the DU #2 (or the O-DU #2) via an RU. The RU herein includes an RU #2 corresponding to the DU #2 (or the O-DU #2) and an RU #1 corresponding to the DU #1 (or the O-DU #1).

S404: The secondary base station establishes a first DRB for the QoS flow of the terminal device, and determines at least one split ratio of the first DRB. The first DRB is a split bearer with a data anchor of the terminal device on the secondary base station.

Based on the example in which the secondary base station is split into the CU #1 (or the O-CU #1) and the DU #1 (or the O-DU #1), S404 may be replaced with the following: The CU #1 (or the O-CU #1) establishes the first DRB for the QoS flow of the terminal device, and determines the at least one split ratio of the first DRB.

For descriptions of the at least one split ratio of the first DRB, refer to related descriptions in the foregoing method 300. Details are not described herein again.

S405: The secondary base station sends a first response message to the primary base station. Correspondingly, the primary base station receives the first response message.

Based on the example in which the secondary base station is split into the CU #1 (or the O-CU #1) and the DU #1 (or the O-DU #1), and the primary base station is split into the CU #2 (or the O-CU #2) and the DU #2 (or the O-DU #2), S405 may be replaced with the following: The CU #1 (or the O-CU #1) sends the first response message to the DU #1 (or the O-DU #1), the DU #1 (or the O-DU #1) sends the first response message to the DU #2 (or the O-DU #2), and the DU #2 (or the O-DU #2) sends the first response message to the CU #2 (or the O-CU #2).

The first response message includes the first DRB and a QoS guarantee that the primary base station needs to provide for the first DRB. For descriptions of the QoS guarantee, refer to the foregoing descriptions in S403. Details are not described herein again.

The first response message may be understood as the second message in the method 300.

Optionally, the first response message may further include the at least one split ratio of the first DRB.

It should be understood that there is a one-to-one correspondence between the at least one split ratio and the QoS parameter (that is, the uplink transmission bit rate).

S406: The primary base station sends an RRC reconfiguration message to the terminal device. Correspondingly, the terminal device receives the RRC reconfiguration message.

The RRC reconfiguration message includes the at least one split ratio that is of the first DRB and that is determined by the secondary base station, and a configuration of an RLC bearer that is established by the primary base station on the primary base station for the first DRB.

Based on the example in which the primary base station is split into the CU #2 (or the O-CU #2) and the DU #2 (or the O-DU #2), S406 may be replaced with the following: The CU #2 (or the O-CU #2) sends the RRC reconfiguration message to the DU #2 (or the O-DU #2), and the DU #2 (or the O-DU #2) sends the RRC reconfiguration message to the terminal device.

It may be understood that the DU #2 (or the O-DU #2) may send the RRC reconfiguration message to the terminal device via the RU #2. Similarly, the terminal device receives the message from the DU #2 (or the O-DU #2) via the RU #2. The RU #2 corresponds to the DU #2 (or the O-DU #2).

S407: The terminal device determines a first split ratio.

For this process, refer to the foregoing descriptions of determining the first split ratio in S303. Details are not described herein again.

S408: The terminal device splits uplink data of the first DRB based on the first split ratio, to determine data #1 and data #2.

The data #1 corresponds to the secondary base station, and the data #2 corresponds to the primary base station. The data #1 may be understood as the first data in the method 300, and the data #2 may be understood as the second data in the method 300.

S409: The terminal device sends a BSR #1 to the primary base station, where the BSR #1 is related to the data #2.

That the BSR #1 is related to the data #2 means that buffer information included in the BSR #1 is determined by the terminal device based on the data #2.

Optionally, before sending the BSR #1, the terminal device needs to cancel a BSR that has been triggered but that has not been sent.

Optionally, the method 400 further includes S410: The terminal device sends a BSR #2 to the secondary base station, where the BSR #2 is related to the data #1.

That the BSR #2 is related to the data #1 means that buffer information included in the BSR #2 is determined by the terminal device based on the data #1.

The BSR #1 may be understood as the second BSR in the method 300, and the BSR #2 may be understood as the first BSR in the method 300. Therefore, for descriptions of the BSR #1 and the BSR #2, refer to the foregoing related descriptions. Details are not described herein again.

Optionally, when an air interface resource of the primary base station changes, S411 to S416 may continue to be performed.

S411: The primary base station sends flow control information to the secondary base station. Correspondingly, the secondary base station receives the flow control information.

The flow control information includes an uplink transmission bit rate currently provided by the primary base station for the first DRB, and/or an uplink transmission bit rate that is predicted by the primary base station and that can be provided for the first DRB.

Optionally, the flow control information further includes a predicted valid duration.

The flow control information may be understood as the fourth information in the method 300. Therefore, for more detailed descriptions of the flow control information, refer to the foregoing descriptions of the fourth information. Details are not described herein again.

Based on the example in which the primary base station is split into the CU #2 (or the O-CU #2) and the DU #2 (or the O-DU #2), S411 may be replaced with the following: The DU #2 (or the O-DU #2) sends the flow control information to the terminal device. Optionally, the DU #2 (or the O-DU #2) sends the flow control information to the CU #2 (or the O-CU #2).

It may be understood that the DU #2 (or the O-DU #2) may send the flow control information to the terminal device via the RU #2.

S412: The secondary base station sends an updated split ratio to the primary base station. Correspondingly, the primary base station receives the updated split ratio.

Based on the example in which the secondary base station is split into the CU #1 (or the O-CU #1) and the DU #1 (or the O-DU #1), and the primary base station is split into the CU #2 (or the O-CU #2) and the DU #2 (or the O-DU #2), S412 may be replaced with the following: The DU #1 (or the O-DU #1) sends the split ratio to the DU #2 (or the O-DU #2), and the DU #2 (or the O-DU #2) sends the split ratio to the CU #2 (or the O-CU #2). Optionally, the DU #1 (or the O-DU #1) sends the split ratio to the CU #1 (or the O-CU #1).

It may be understood that the DU #1 (or the O-DU #1) may send the split ratio to the DU #2 (or the O-DU #2) via an RU. For descriptions of the RU, refer to the descriptions in S403. Details are not described herein again.

For example, the secondary base station sends a second split ratio to the primary base station.

Optionally, the primary base station sends acknowledgment information to the secondary base station.

Optionally, S412 may be replaced with the following: The primary base station sends the updated split ratio to the secondary base station. Correspondingly, the secondary base station receives the updated split ratio, and returns a rejection or an acknowledgment to the primary base station.

S413: The secondary base station sends the updated split ratio to the terminal device. Correspondingly, the terminal device receives the updated split ratio.

Based on the example in which the secondary base station is split into the CU #1 (or the O-CU #1) and the DU #1 (or the O-DU #1), S413 may be replaced with the following: The DU #1 (or the O-DU #1) sends the updated split ratio to the terminal device.

S414: The terminal device splits the uplink data of the first DRB based on the updated split ratio, to determine data #3 and data #4.

The data #3 corresponds to the secondary base station, and the data #4 corresponds to the primary base station. The data #3 may be understood as the foregoing first data, and the data #4 may be understood as the foregoing second data.

S415: The terminal device sends a BSR #3 to the primary base station, where the BSR #3 is related to the data #4.

That the BSR #3 is related to the data #4 means that buffer information included in the BSR #3 is determined by the terminal device based on the data #4.

Optionally, the method 400 further includes S416: The terminal device sends a BSR #4 to the secondary base station, where the BSR #4 is related to the data #3.

That the BSR #4 is related to the data #3 means that buffer information included in the BSR #1 is determined by the terminal device based on the data #3.

The BSR #3 may be understood as the second BSR in the method 300, and the BSR #4 may be understood as the first BSR in the method 300. Therefore, for descriptions of the BSR #3 and the BSR #4, refer to the foregoing related descriptions. Details are not described herein again.

In this embodiment of this application, the secondary base station sends the at least one split ratio of the first DRB to the terminal device via the primary base station, so that the terminal device can determine, from the at least one split ratio of the first DRB, the first split ratio that is for splitting the first DRB. The at least one split ratio sent by the base station to the terminal device is determined by a base station side through negotiation, and the base station side may also indicate an updated split ratio to the terminal device in time when an air interface resource on the base station side changes. Therefore, according to the method provided in this embodiment of this application, efficient resource scheduling between the terminal device and the primary and secondary access network devices can be implemented, thereby improving uplink transmission efficiency.

The following uses an example in which a data anchor of a split bearer is on a primary base station to describe in detail, with reference to FIG. 5, a method provided in an embodiment of this application.

FIG. 5 is still another schematic flowchart of a communication method 500 according to an embodiment of this application. As shown in FIG. 5, the method 500 includes S501 to S517. The following describes the steps of the method 500 in detail.

S501: A terminal device connects to a primary base station.

S502: The primary base station determines to add a secondary base station for the terminal device, and establishes a first DRB for a QoS flow of the terminal device. The first DRB is a split bearer with a data anchor of the terminal device on the primary base station.

S503: The primary base station sends a second request message to the secondary base station, where the second request message includes a QoS parameter of the first DRB. Correspondingly, the secondary base station receives the second request message.

The QoS parameter is a QoS guarantee that the primary base station requests the secondary base station to provide for the first DRB. For descriptions of the QoS guarantee, refer to the related descriptions in S402. Details are not described herein again.

Optionally, the second request message further indicates the secondary base station to establish an RLC bearer for the first DRB.

The second request message may be understood as the second message in the method 300.

S504: The secondary base station sends a second response message to the primary base station, where the second response message includes a QoS guarantee provided by the secondary base station for the first DRB. Correspondingly, the primary base station receives the second response message.

For descriptions of the QoS guarantee, refer to the related descriptions in S402. Details are not described herein again.

The second response message may be understood as the first message in the method 300.

S505: The primary base station determines at least one split ratio of the first DRB based on the second response message.

S506: The primary base station sends the at least one split ratio of the first DRB to the secondary base station. Correspondingly, the secondary base station receives the at least one split ratio of the first DRB.

For descriptions of the at least one split ratio, refer to related descriptions in S301. Details are not described herein again.

S507: The primary base station sends an RRC reconfiguration message to the terminal device. Correspondingly, the terminal device receives the RRC reconfiguration message.

The RRC reconfiguration message includes the at least one split ratio of the first DRB. The RRC reconfiguration message may be understood as the first information in the foregoing method 300.

S508: The terminal device determines a first split ratio.

S509: The terminal device splits uplink data of the first DRB based on the first split ratio, to determine data #1 and data #2.

The data #1 corresponds to the primary base station, and the data #2 corresponds to the secondary base station. The data #1 may be understood as the first data in the method 300, and the data #2 may be understood as the second data in the method 300.

S510: The terminal device sends a BSR #1 to the primary base station, where the BSR #1 is related to the data #1.

That the BSR #1 is related to the data #1 means that buffer information included in the BSR #1 is determined by the terminal device based on the data #1.

Optionally, before sending the BSR #1, the terminal device needs to cancel a BSR that has been triggered but that has not been sent.

Optionally, the method 500 further includes S511: The terminal device sends a BSR #2 to the secondary base station, where the BSR #2 is related to the data #2.

That the BSR #2 is related to the data #2 means that buffer information included in the BSR #2 is determined by the terminal device based on the data #2.

The BSR #1 may be understood as the first BSR in the method 300, and the BSR #2 may be understood as the second BSR in the method 300. Therefore, for descriptions of the BSR #1 and the BSR #2, refer to the foregoing related descriptions. Details are not described herein again.

Optionally, when an air interface resource of the secondary base station changes, S512 to S517 may continue to be performed.

S512: The secondary base station sends flow control information to the primary base station. Correspondingly, the primary base station receives the flow control information from the secondary base station.

The flow control information includes an uplink transmission bit rate currently provided by the secondary base station for the first DRB, and/or an uplink transmission bit rate that is predicted by the secondary base station and that can be provided for the first DRB.

S513: The primary base station sends an updated split ratio to the secondary base station. Correspondingly, the secondary base station receives the updated split ratio.

Optionally, the secondary base station sends acknowledgment information to the primary base station.

Optionally, S513 may be replaced with the following: The secondary base station sends the updated split ratio to the primary base station. Correspondingly, the primary base station receives the updated split ratio, and returns a rejection or an acknowledgment to the secondary base station.

S514: The primary base station sends the updated split ratio to the terminal device. Correspondingly, the terminal device receives the updated split ratio.

S515: The terminal device splits the uplink data of the first DRB based on the updated split ratio, to determine data #3 and data #4.

The data #3 corresponds to the primary base station, and the data #4 corresponds to the secondary base station. The data #3 may be understood as the first data in the method 300, and the data #4 may be understood as the second data in the method 300.

S516: The terminal device sends a BSR #3 to the primary base station, where the BSR #3 is related to the data #3.

Optionally, the method 500 further includes S517: The terminal device sends a BSR #4 to the secondary base station, where the BSR #4 is related to the data #4.

The BSR #3 may be understood as the first BSR in the method 300, and the BSR #4 may be understood as the second BSR in the method 300. Therefore, for descriptions of the BSR #3 and the BSR #4, refer to the foregoing related descriptions. Details are not described herein again.

For S508 to S517, refer to the descriptions of S407 to S416 in the method 400. Details are not described herein.

For example, when the primary base station is split into a CU #2 (or an O-CU #2) and a DU #2 (or an O-DU #2), and the secondary base station is split into a CU #1 (or an O-CU #1) and a DU #1 (or an O-DU #1), for more detailed descriptions of S502 to S517, refer to the descriptions in the method 400. Details are not described herein again.

In this embodiment of this application, the secondary base station sends the at least one split ratio of the first DRB to the terminal device via the primary base station, so that the terminal device can determine, from the at least one split ratio of the first DRB, the first split ratio that is for splitting the first DRB. The at least one split ratio sent by the base station to the terminal device is determined by a base station side through negotiation, and the base station side may also indicate an updated split ratio to the terminal device in time when an air interface resource on the base station side changes. Therefore, according to the method provided in this embodiment of this application, efficient resource scheduling between the terminal device and the primary and secondary access network devices can be implemented, thereby improving uplink transmission efficiency.

It may be understood that the embodiments shown in FIG. 3 to FIG. 5 are independently implemented. When the embodiments shown in FIG. 3 to FIG. 5 are separately implemented, more or fewer steps than the steps shown in FIG. 4 and FIG. 5 may be performed. In other words, the steps shown in the foregoing embodiments may be all performed, or may be partially performed. This is not limited in this application.

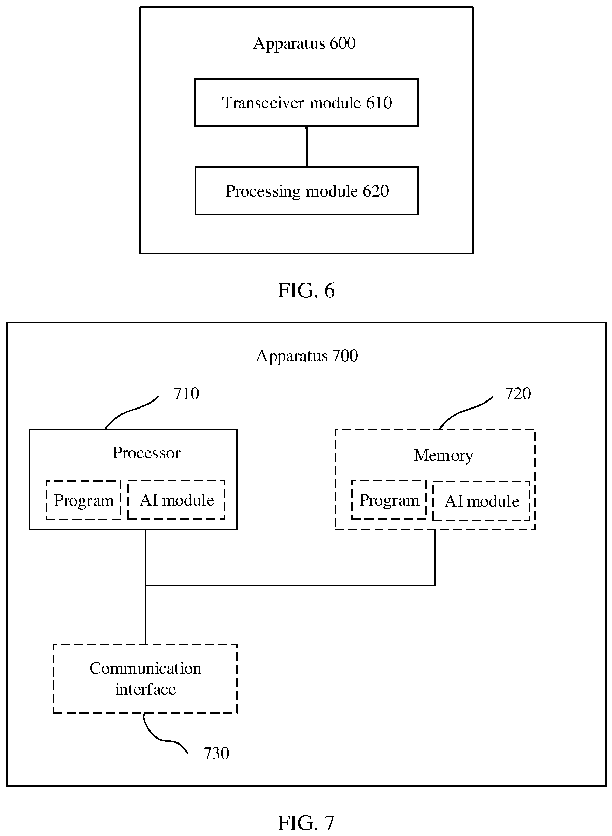

The foregoing describes in detail the methods provided in embodiments of this application with reference to FIG. 3 to FIG. 5. The following describes in detail apparatuses provided in embodiments of this application with reference to FIG. 6 to FIG. 9.

FIG. 6 and FIG. 7 are diagrams of possible apparatuses according to embodiments of this application. These apparatuses may be configured to implement functions of the terminal device, the first access network device, or the second access network device in the foregoing method embodiments, and therefore may also implement beneficial effects of the foregoing method embodiments.

FIG. 6 is a block diagram of an apparatus according to an embodiment of this application. As shown in FIG. 6, the apparatus 600 includes a transceiver module 610 and a processing module 620.

In a possible design, the apparatus 600 is configured to implement functions of the terminal device in the method embodiments shown in FIG. 3 to FIG. 5.

For example, the transceiver module 610 is configured to receive first information, where the first information indicates at least one split ratio of a first radio bearer RB. The processing module 620 is configured to determine a first split ratio, where the first split ratio belongs to the at least one split ratio. The transceiver module 610 is further configured to transmit uplink data of the first RB based on the first split ratio.

Optionally, the processing module 620 is specifically configured to determine the first split ratio based on second information, where the second information indicates the first split ratio.

Optionally, the processing module 620 is further configured to split the uplink data of the first RB based on the first split ratio, and determine first data and second data, where the first data corresponds to a first access network device, and the second data corresponds to a second access network device. The transceiver module 610 is further configured to transmit the first data to the first access network device; and transmit the second data to the second access network device.

Optionally, the processing module 620 is further configured to determine first buffer information based on the first data. The transceiver module 610 is further configured to send a first buffer status report BSR to the first access network device, where the first BSR includes the first buffer information.

Optionally, the processing module 620 is further configured to cancel a BSR that is triggered before the first BSR is sent but that has not been sent to the first access network device.

Optionally, the processing module 620 is further configured to determine second buffer information based on the second data. The transceiver module 610 is further configured to send a second BSR to the second access network device, where the second BSR includes the second buffer information.

Optionally, the processing module 620 is further configured to cancel a BSR that is triggered before the second BSR is sent but that has not been sent to the second access network device.

For more detailed descriptions of the transceiver module 610 and the processing module 620, directly refer to related descriptions of the embodiments shown in FIG. 3 to FIG. 5. Details are not described herein again.

In another possible design, the apparatus 600 is configured to implement functions of the first access network device in the method embodiments shown in FIG. 3 to FIG. 5.

For example, the processing module 620 is configured to determine first information, where the first information indicates at least one split ratio of a first RB. The transceiver module 610 is configured to send the first information.

Optionally, the transceiver module 610 is further configured to send second information, where the second information indicates a first split ratio in the at least one split ratio.

Optionally, the transceiver module 610 is further configured to receive third information from a second access network device, where the third information is for updating a split ratio.

Optionally, the transceiver module 610 is further configured to receive a first message from the second access network device, where the first message is for determining the first information.

For more detailed descriptions of the transceiver module 610 and the processing module 620, directly refer to related descriptions of the embodiments shown in FIG. 3 to FIG. 5. Details are not described herein again.

In another possible design, the apparatus 600 is configured to implement functions of the second access network device in the method embodiments shown in FIG. 3 to FIG. 5.

For example, the transceiver module 610 is configured to receive first information, where the first information indicates at least one split ratio of a first RB.

Optionally, the transceiver module 610 is further configured to send a first message to the second access network device, where the first message is for determining the first information.

Optionally, the transceiver module 610 is further configured to send third information to the first access network device, where the third information is for updating a split ratio.

For more detailed descriptions of the transceiver module 610 and the processing module 620, directly refer to related descriptions of the embodiments shown in FIG. 3 to FIG. 5. Details are not described herein again.

It should be noted that the apparatus 600 may include the sending module but does not include the receiving module. Alternatively, the apparatus 600 may include the receiving module but does not include the sending module. This may be specifically determined depending on whether the foregoing solutions performed by the apparatus 600 include a sending action and a receiving action. It may be understood that because the apparatus 600 has a communication function, the apparatus may also be referred to as a communication apparatus.

FIG. 7 is another block diagram of an apparatus according to an embodiment of this application. As shown in FIG. 7, the apparatus 700 includes one or more processors 710. The processor 710 may be a general-purpose processor, a dedicated processor, or the like. For example, the processor may be a baseband processor or a central processing unit. The baseband processor may be configured to process a communication protocol and communication data. The central processing unit may be configured to: control an apparatus (for example, a terminal device, a first access network device, a second access network device, or a chip), execute a software program, and process data of the software program.

Optionally, in a design, the processor 710 may include a program (which may also be referred to as code or instructions sometimes), and the program may be run on the processor 710, to enable the apparatus 700 to perform the method performed by the terminal device, the first access network device, or the second access network device in the foregoing method embodiments. In another possible design, the apparatus 700 includes a circuit (not shown in FIG. 7), and the circuit is configured to implement functions of the terminal device, the first access network device, or the second access network device in the foregoing method embodiments.

For example, the processor 710 may be configured to execute a computer program or instructions in a memory, to implement steps performed by the terminal device, the first access network device, or the second access network device in the method embodiment in any one of the embodiments shown in FIG. 3 to FIG. 5.

Optionally, the apparatus 700 may include one or more memories 720 that store a program (which may also be referred to as code or instructions sometimes), and the program may be run on the processor 710, to enable the apparatus 700 to perform the method performed by the terminal device, the first access network device, or the second access network device in the foregoing embodiments.

Optionally, the processor 710 and/or the memory 720 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a near-real-time RIC or a non-real-time RIC.

Optionally, the processor 710 and/or the memory 720 may further store data. The processor and the memory may be separately disposed, or may be integrated together.

Optionally, the apparatus 700 may further include a communication interface 730. The processor 710 may also be referred to as a processing unit sometimes, and controls an apparatus (for example, the terminal device, the first access network device, or the second access network device). The communication interface 730 sometimes may also be referred to as a transceiver unit, a transceiver machine, a transceiver circuit, a transceiver, or the like, and is configured to implement a transceiver function of the apparatus.

Optionally, the apparatus 700 further includes the communication interface 730. The processor 710 and the communication interface 730 are coupled to each other. It may be understood that the communication interface 730 may be a transceiver or an input/output interface.

It may be understood that because the apparatus 700 has a communication function, the apparatus may also be referred to as a communication apparatus.

When the apparatus 700 is configured to implement the method in FIG. 3, the processor 710 is configured to perform functions of the foregoing processing unit, and the communication interface 730 is configured to perform functions of the foregoing transceiver module. Whether the communication interface 730 is used for sending or receiving may be specifically determined depending on whether the apparatus 700 is configured to perform a sending action or a receiving action in the solution performed by the apparatus.

When the apparatus 700 is a chip used in a terminal device, the chip implements functions of the terminal device in the foregoing method embodiments. The chip of the terminal device receives a signal from another module (for example, a radio frequency module or an antenna) in the terminal device, where the signal may be sent by a first access network device or a second access network device to the terminal device. Alternatively, the chip of the terminal device sends a signal to another module (for example, a radio frequency module or an antenna) in the terminal device, where the signal may be sent by the terminal device to a first access network device or a second access network device.

When the apparatus 700 is a chip used in a first access network device (or a second access network device), the chip implements functions of the first access network device (or the second access network device) in the foregoing method embodiments. The chip of the first access network device (or the second access network device) receives a signal from another module (for example, a radio frequency module or an antenna) in the first access network device (or the second access network device), where the signal may be sent by a terminal device to the first access network device (or the second access network device). Alternatively, the chip of the network device sends a signal to another module (for example, a radio frequency module or an antenna) in the first access network device (or the second access network device), where the signal may be sent by the first access network device (or the second access network device) to a terminal device.

It may be understood that when the apparatus 700 is a terminal device, a first access network device, or a second access network device, the communication interface 730 may be a transceiver, and may specifically include a transmitter and a receiver. The transmitter is configured to send a signal, and the receiver is configured to receive a signal. When the apparatus 700 is a chip used in a terminal device, a first access network device, or a second access network device, the communication interface 730 may be an input/output circuit. The input circuit may be used for receiving, and the output interface may be used for sending.

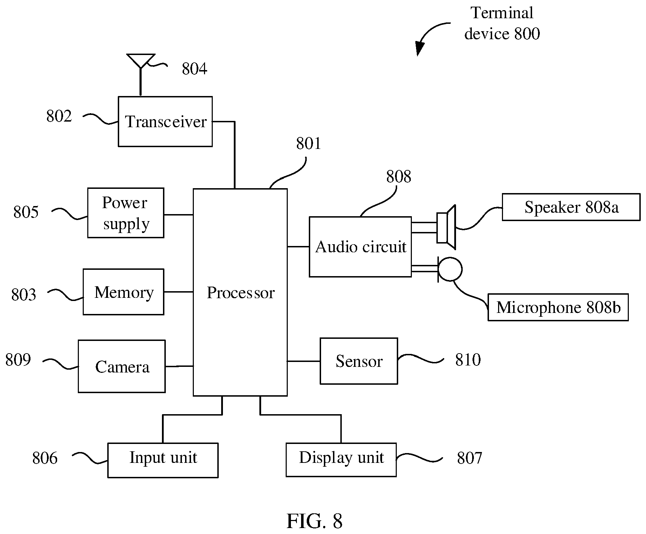

FIG. 8 is a structural diagram of a terminal device according to an embodiment of this application. As shown in FIG. 8, the terminal device 800 may be used in the system shown in FIG. 1, to perform functions of the terminal device in the foregoing method embodiments. As shown in the figure, the terminal device 800 includes a processor 801 and a transceiver 802. Optionally, the terminal device 800 further includes a memory 803. The processor 801, the transceiver 802, and the memory 803 communicate with each other through an internal connection path, to transfer a control signal and/or a data signal. The memory 803 is configured to store a computer program. The processor 801 is configured to invoke the computer program from the memory 803 and run the computer program, to control the transceiver 802 to receive/send a signal. Optionally, the terminal device 800 may further include an antenna 804, configured to send, via a radio signal, uplink data or uplink control signaling output by the transceiver 802.

The processor 801 and the memory 803 may be integrated into one processing apparatus. The processor 801 is configured to execute program code stored in the memory 803 to implement the foregoing functions. During specific implementation, the memory 803 may alternatively be integrated into the processor 801, or may be independent of the processor 801. The processor 801 may correspond to the processing module in FIG. 6 or the processor in FIG. 7.

The transceiver 802 may correspond to the transceiver module in FIG. 6 or the communication interface in FIG. 7, and may also be referred to as a transceiver unit. The transceiver 802 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It should be understood that, the terminal device 800 shown in FIG. 8 can implement the steps related to the terminal device in the method embodiments shown in FIG. 3 to FIG. 5. Operations and/or functions of the modules in the terminal device 800 are separately intended to implement corresponding procedures in the foregoing method embodiments. For details, refer to the descriptions in the foregoing method embodiments. To avoid repetition, detailed descriptions are properly omitted herein.

The processor 801 may be configured to perform an action that is implemented inside the terminal device and that is described in the foregoing method embodiments. The transceiver 802 may be configured to perform a sending action by the terminal device for the network device or a receiving operation from the network device in the foregoing method embodiments. For details, refer to the descriptions in the foregoing method embodiments. Details are not described herein again.

Optionally, the terminal device 800 may further include a power supply 805, configured to supply power to various components or circuits in the terminal device 800.

In addition, to make functions of the terminal device more perfect, the terminal device 800 may further include one or more of an input unit 806, a display unit 807, an audio circuit 808, a camera 809, a sensor 810, and the like, and the audio circuit may further include a speaker 808a, a microphone 808b, and the like.

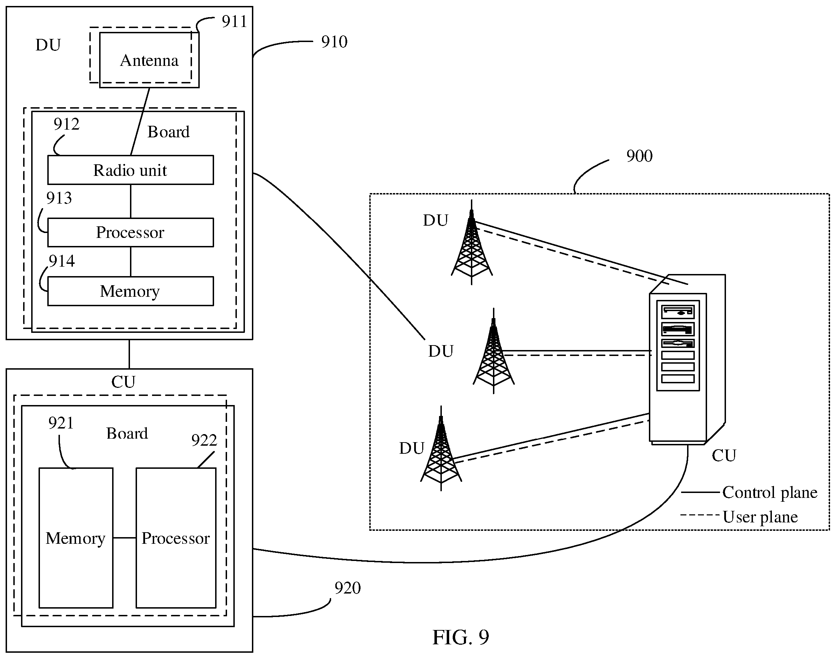

FIG. 9 is a structural diagram of a radio access network device according to an embodiment of this application, for example, may be a structural diagram of a base station. The base station 900 may be used in the system shown in FIG. 1, and performs functions of the access network device in the foregoing method embodiments. As shown in FIG. 9, the base station 900 may include one or more of the following: one or more (DUs and RUs) 910 and one or more CUs 920. The CU 920 may communicate with a next generation core (next generation core, NG core). The DU may include at least one antenna 911, at least one radio frequency unit 912, at least one processor 913, and at least one memory 914. The DU is mainly configured to receive and send radio frequency signals, convert a radio frequency signal and a baseband signal, and perform some baseband processing. The CU 920 may include at least one processor 922 and at least one memory 921. The CU and the DU may communicate with each other through an interface. A control plane (control plane, CP) interface may be Fs-C, for example, F1-C, and a user plane (user plane, UP) interface may be Fs-U, for example, F1-U. The DU and the RU may cooperate to jointly implement a function of a physical (physical, PHY) layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function and a radio frequency function of the PHY layer. The higher-layer function of the PHY layer may include a part of functions of the PHY layer, and the part of functions is closer to a MAC layer. The lower-layer function of the PHY layer may include another part of functions of the PHY layer, and the part of functions is closer to an intermediate radio frequency side.

The CU 920 is mainly configured to perform baseband processing, control a base station, and the like. The DU and the CU 920 may be physically disposed together, or may be physically separated, that is, in a distributed base station. The CU 920 is a control center of the base station, may correspond to the processing module in FIG. 6 or the processor in FIG. 7, may also be referred to as a processing unit, and is mainly configured to complete a baseband processing function. For example, the CU 920 may be configured to control the base station to perform an operation procedure related the access network device in the foregoing method embodiments.

Specifically, baseband processing performed by the CU and the DU may be divided based on protocol layers of a wireless network. For example, functions of a PDCP layer and protocol layers above the PDCP layer are set on the CU, and functions of protocol layers below the PDCP layer, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the base station 900 may include one or more radio frequency units (RUs), one or more DUs, and one or more CUs. The DU may include at least one processor 913 and at least one memory 914, the RU may include at least one antenna 911 and at least one radio frequency unit 912, and the CU may include at least one processor 922 and at least one memory 921.

In an instance, the CU 920 may include one or more boards, and a plurality of boards may jointly support a radio access network (for example, a 5G network) of a single access standard, or may separately support radio access networks (for example, an LTE network, a 5G network, or another network) of different access standards. The memory 921 and the processor 922 may serve one or more boards. In other words, a memory and a processor may be disposed on each board. Alternatively, a plurality of boards may share a same memory and a same processor. In addition, a necessary circuit may further be disposed on each board. The DU may include one or more boards, and a plurality of boards may jointly support a radio access network (for example, a 5G network) of a single access standard, or may separately support radio access networks (for example, an LTE network, a 5G network, or another network) of different access standards. The memory 914 and the processor 913 may serve one or more boards. In other words, a memory and a processor may be disposed on each board. Alternatively, a plurality of boards may share a same memory and a same processor. In addition, a necessary circuit may further be disposed on each board.

It should be understood that, the base station 900 shown in FIG. 9 can implement processes related to the first access network device or the second access network device in the method embodiments shown in FIG. 3 to FIG. 5. Operations and/or functions of the modules in the base station 900 are separately intended to implement corresponding procedures in the foregoing method embodiments. For details, refer to the descriptions in the foregoing method embodiments. To avoid repetition, detailed descriptions are properly omitted herein.

It should be understood that, the base station 900 shown in FIG. 9 is merely a possible architecture of the radio access network device, and should not constitute any limitation on this application. The method provided in this application is applicable to a network device in another architecture, for example, a radio access network device including a CU, a DU, and an AAU. A specific architecture of the radio access network device is not limited in this application.

It should be understood that, FIG. 9 is merely an example rather than a limitation, and the radio access network device may not depend on the structure shown in FIG. 9. For example, the radio access network device may also include an AAU, and may further include a CU and/or a DU; or the radio access network device may also include a BBU, and may further include an adaptive radio unit (adaptive radio unit, ARU). This is not limited in this application.

The CU and/or the DU may be configured to perform an action that is implemented inside the radio access network device and that is described in the foregoing method embodiments. The AAU may be configured to perform an action that is of the radio access network device sending information to or receiving information from the terminal device and that is described in the foregoing method embodiments. For details, refer to the descriptions in the foregoing method embodiments. Details are not described herein again.

It should be noted that, the foregoing method embodiments may be applied to a processor, or implemented by a processor. The processor may be an integrated circuit chip and has a signal processing capability. In an implementation process, steps in the foregoing method embodiments can be implemented by using a hardware integrated logical circuit in the processor, or by using instructions in a form of software.

The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

The entirety or a part of the method provided in the foregoing embodiments may be implemented by software, hardware, firmware, or any combination thereof. When software is used to implement the embodiments, all or a part of the embodiments may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (solid-state drive, SSD)), or the like.

An embodiment of this application further provides a computer program product. The computer program product includes a computer program (which may also be referred to as code or instructions). When the computer program is run, the method performed by the terminal device, the method performed by the first access network device, the method performed by the second access network device in the embodiments shown in FIG. 3 to FIG. 5 is performed.

An embodiment of this application further provides a computer-readable storage medium. The computer-readable storage medium stores a computer program (which may also be referred to as code or instructions). When the computer program is run, the method performed by the terminal device, the method performed by the first access network device, the method performed by the second access network device in the embodiments shown in FIG. 3 to FIG. 5 is performed.

An embodiment of this application further provides a chip. The chip includes at least one processor and a communication interface. The communication interface and the at least one processor are interconnected through a line. When the at least one processor runs a computer program or instructions, the method performed by the terminal device, the method performed by the first access network device, the method performed by the second access network device in the embodiments shown in FIG. 3 to FIG. 5 is performed.

An embodiment of this application further provides a communication system. The communication system includes the foregoing terminal device, the foregoing first access network device, and the foregoing second access network device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a compute device (which may be a personal computer, a server, a network device, or the like) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, wherein the method comprises:
receiving first information, wherein the first information indicates at least one split ratio of a first radio bearer RB, and the first RB is a split bearer between a first access network device and the terminal device and between a second access network device and the terminal device;
determining a first split ratio, wherein the first split ratio belongs to the at least one split ratio; and
transmitting uplink data of the first RB based on the first split ratio.

2. The method according to claim 1, wherein the first split ratio is a ratio of any two of the following data volumes: a data volume of uplink data of the first RB that is split to the first access network device, a data volume of uplink data of the first RB that is split to the second access network device, or a data volume of the uplink data of the first RB.

3. The method according to claim 1 or 2, wherein the first split ratio is a 1^{st} split ratio in the at least one split ratio.

4. The method according to claim 1 or 2, wherein determining the first split ratio comprises:
determining the first split ratio based on second information, wherein the second information indicates the first split ratio.

5. The method according to claim 4, wherein the first information and the second information are carried in same radio resource control RRC signaling; or
the first information is carried in RRC signaling, and the second information is carried in media access control MAC layer signaling, physical layer signaling, or a packet data convergence protocol PDCP control packet data unit PDU.

6. The method according to claim 4 or 5, wherein the second information comprises an indication of the first RB and an indication of the first split ratio.

7. The method according to any one of claims 1 to 6, wherein the at least one split ratio corresponds to at least one duration and/or at least one data volume.

8. The method according to claim 7, wherein the method further comprises:
determining a first time period and/or a first data volume corresponding to the first split ratio.

9. The method according to any one of claims 1 to 8, wherein transmitting the uplink data of the first RB based on the first split ratio comprises:
splitting the uplink data of the first RB based on the first split ratio, and determining first data and second data, wherein the first data corresponds to the first access network device, and the second data corresponds to the second access network device;
transmitting the first data to the first access network device; and
transmitting the second data to the second access network device.

10. The method according to claim 9, wherein the method further comprises:
determining first buffer information based on the first data; and
sending a first buffer status report BSR to the first access network device, wherein the first BSR comprises the first buffer information.

11. The method according to claim 10, wherein the method further comprises:
canceling a BSR that is triggered before the first BSR is sent but that has not been sent to the first access network device.

12. The method according to any one of claims 9 to 11, wherein the method further comprises:
determining second buffer information based on the second data, and sending a second BSR to the second access network device, wherein the second BSR comprises the second buffer information.

13. The method according to claim 12, wherein the method further comprises:
canceling a BSR that is triggered before the second BSR is sent but that has not been sent to the second access network device.

14. A communication method, applied to a first access network device, wherein the first access network device is an access network device that establishes a first radio bearer RB, and the method comprises:
determining first information, wherein the first information indicates at least one split ratio of the first RB, and the first RB is a split bearer between the first access network device and a terminal device and between a second access network device and the terminal device; and
sending the first information.

15. The method according to claim 14, wherein a first split ratio in the at least one split ratio is a ratio of any two of the following data volumes: a data volume of uplink data of the first RB that is split to the first access network device, a data volume of uplink data of the first RB that is split to the second access network device, or a data volume of the uplink data of the first RB.

16. The method according to claim 14 or 15, wherein the method further comprises:
sending second information, wherein the second information indicates the first split ratio in the at least one split ratio.

17. The method according to claim 16, wherein the first information and the second information are carried in same radio resource control RRC signaling; or
the first information is carried in RRC signaling, and the second information is carried in media access control MAC layer signaling, physical layer signaling, or a packet data convergence protocol PDCP control packet data unit PDU.

18. The method according to claim 16 or 17, wherein the second information comprises an indication of the first RB and an indication of the first split ratio.

19. The method according to any one of claims 14 to 18, wherein the at least one split ratio corresponds to at least one time period and/or at least one data volume.

20. The method according to any one of claims 14 to 19, wherein the method further comprises:
receiving third information from the second access network device, wherein the third information is for updating a split ratio.

21. The method according to claim 20, wherein the third information comprises an uplink transmission bit rate currently provided by the second access network device for the first RB, and/or an uplink transmission bit rate that is predicted by the second access network device and provided for the first RB.

22. The method according to any one of claims 14 to 21, wherein the method further comprises:
receiving a first message from the second access network device, wherein the first message is for determining the first information.

23. The method according to claim 22, wherein the first message comprises an uplink transmission bit rate provided by the second access network device for the first RB.

24. A communication apparatus, comprising a module configured to implement the method according to any one of claims 1 to 13, or a module configured to implement the method according to any one of claims 14 to 23.

25. A communication apparatus, comprising a processor, configured to execute a computer program and/or a logic circuit, so that the communication apparatus implements the method according to any one of claims 1 to 13, or the communication apparatus implements the method according to any one of claims 14 to 23.

26. The apparatus according to claim 25, further comprising a memory, configured to store a computer program and/or a configuration file of the logic circuit.

27. The apparatus according to claim 25 or 26, further comprising a communication interface configured to input and/or output a signal.

28. A computer-readable storage medium, wherein the computer-readable storage medium stores a computer program; and when the computer program is executed by a processor, the method according to any one of claims 1 to 13 is performed, or the method according to any one of claims 14 to 23 is performed.

29. A computer program product, comprising a computer program, wherein when the computer program is run, the method according to any one of claims 1 to 13 is performed, or the method according to any one of claims 14 to 23 is performed.

30. A chip, comprising at least one processor and a communication interface, wherein the communication interface and the at least one processor are interconnected through a line, and the at least one processor is configured to run a computer program or instructions, to perform the method according to any one of claims 1 to 13 or the method according to any one of claims 14 to 23.

31. A communication system, comprising a terminal device and a first access network device, wherein the terminal device is configured to implement the method according to any one of claims 1 to 13, and the first access network device is configured to implement the method according to any one of claims 14 to 23.
